# EUROPEAN PATENT SPECIFICATION

(11) **EP 4 244 089 B1**
(45) Date of publication and mention of the grant of the patent: **18.03.2026**
(21) Application number: 21806406.1
(22) Date of filing: 11.11.2021
(51) Int. Cl.: H02J 1/10, B60L 3/00, B60L 15/32, B60L 58/21, B60L 1/00, B60L 50/60, B60L 58/18

(54) **POWER-SUPPLY SYSTEM OF ELECTRIC MOTORS AND AUXILIARY ELECTRIC LOADS FOR AN ELECTRIC VEHICLE, AND ELECTRIC VEHICLE**
STROMVERSORGUNGSSYSTEM FÜR ELEKTROMOTOREN UND ELEKTRISCHE HILFSLASTEN FÜR EIN ELEKTROFAHRZEUG UND ELEKTROFAHRZEUG
SYSTÈME D'ALIMENTATION ÉLECTRIQUE DE MOTEURS ÉLECTRIQUES ET CHARGES ÉLECTRIQUES AUXILIAIRES POUR VÉHICULE ÉLECTRIQUE, ET VÉHICULE ÉLECTRIQUE

(30) Priority: 11.11.2020 IT 202000026954
(43) Date of publication of application: 20.09.2023
(73) Proprietor: Altra S.p.A., 16138 Genova (IT)
(72) Inventor: MANTOVANI, Giorgio, 16138 Genova (IT); BERNARDINI, Alessandro, 16138 Genova (IT)
(74) Representative: Studio Torta S.p.A.
(86) International application number: PCT/IB2021/060455
(87) International publication number: WO 2022/101824

(56) References cited:
- EP-A1- 2 998 150
- US-A1- 2018 029 474

## Description

### TECHNICAL FIELD

The invention relates to a power-supply system for an electric or hybrid vehicle and to an electric or hybrid vehicle including the power-supply system.

### KNOWN STATE OF THE ART

As it is known, in a purely electric vehicle (EV), an electric motor is the only source of energy used to drive the vehicle; in a hybrid vehicle (HV), the electric motor is an auxiliary source of energy added to the internal combustion engine.

In general, the energy powering the electric motor is typically stored in one or more storage batteries.

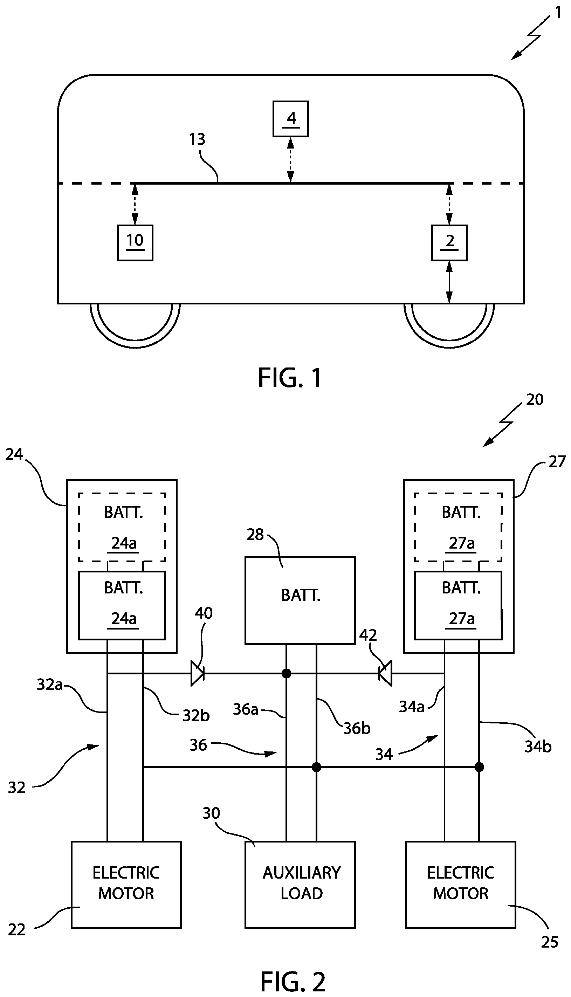

Figure 1 schematically shows a known electric vehicle 1, which is provided with a battery power-supply system 4, which is also known and includes at least one battery, either a single battery or a modular battery (i.e. including a plurality of batteries in parallel). The battery power-supply system 4 is coupled to a main system bus 13 (e.g. DC-link), which is further connected to auxiliary loads 10, to the inverters (not shown) operating as power-supply interface for the electric motors and to the electric motors 2 (in particular, two electric motors) symmetrically acting upon the same vehicle axle (one for the right wheel and one of the left wheel).

The auxiliary loads 10 can include generic components or systems of the electric vehicle, which use, in order to operate, electric current - e.g. the air conditioning system, lighting systems, entertainment systems, air compressors, electric PTOs, etc. The auxiliary loads 10 are connected to the DC-link 13, from which they get the energy needed to operate, through a DC-DC converter, which is not shown herein.

The structure described above entails the use of one single DC-link 13 designed to handle and bear a power that is equal to the sum of all the powers requested by the auxiliary loads and by the electric motors.

Patent document EP2998150 relates to a hybrid drive system, according to which there is an effect where it is possible to attain equalization of the service lives of the power storage devices. However, the above-mentioned issues are not solved.

The object of the invention is to overcome the drawbacks arising from the architecture described above.

### SUMMARY OF THE INVENTION

The aforesaid object is reached by a power-supply system for an electric or hybrid vehicle and by an electric or hybrid vehicle including the power-supply system as defined in the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 schematically shows a known electric vehicle with the sole elements deemed to be useful to understand the invention;
- figure 2 shows a power-supply system according to an embodiment of the invention, which can be used in an electric vehicle of the type shown in figure 1;
- figure 3 shows a power-supply system according to a further embodiment of the invention; and
- figure 4 schematically shows an electric vehicle including the system of figure 2 or figure 3.

### DETAILED DESCRIPTION OF THE INVENTION

Figure 2 schematically shows a power-supply system 20 for an electric or hybrid vehicle with the sole components deemed to be useful to understand the invention.

The system 20 comprises a first storage unit 24 (e.g. including one or more electric batteries 24a at a high voltage, in particular equal to or higher than 60V) to power a first electric motor 22 (in particular, by means of an inverter, which is not shown herein); a second storage unit 27 (e.g. including one or more electric batteries 27a at a high voltage, in particular equal to or higher than 60V) to power a second electric motor 25 (in particular, by means of an inverter, which is not shown herein); a third storage unit 28 to power one or more auxiliary systems or loads 30 of the vehicle (the auxiliary loads 30 can include generic components or systems of the electric vehicle, which use, in order to operate, electric current - e.g. the air conditioning system, lighting systems, entertainment systems, etc.).

The first and the second storage units 24, 27 typically include a respective array of batteries, which, in use, cooperate to power the electric vehicle. However, the invention also applies in case each one of the first and second storage units 24, 27 includes one single battery. Said one or more batteries are, for example, lithium ion batteries. Other possible technologies include lead batteries, NiMH batteries, NiCd batteries, ZEBRA batteries or, in general, electrochemical batteries having the same nominal voltage.

In the embodiment of figure 2, the first storage unit 24 is connected to the first electric motor 22 through a first power-supply line or bus 32, which comprises a positive voltage line 32a and a negative voltage line 32b, from which the first electric motor gets the energy needed to operate. Similarly, the second storage unit 27 is connected to the second electric motor 25 through a second power-supply line or bus 34, which comprises a respective positive voltage line 34a and a respective negative voltage line 34b, from which the second electric motor gets the energy needed to operate. The third storage unit 28 is connected to the auxiliary loads 30 through a third power-supply line or bus 36, which comprises a respective positive voltage line 36a and a respective negative voltage line 36b, from which the auxiliary load 30 get the energy needed to operate.

Furthermore, the positive voltage line 32a of the first power-supply bus 32 is connected to the positive voltage line 36a of the third power-supply bus through a first diode 40. The first diode 40 has the anode terminal connected to the positive voltage line 32a of the first power-supply bus 32 and the cathode terminal connected to the positive voltage line 36a of the third power-supply bus, so as to permit a direct current flow from the first power-supply bus 32 to the third power-supply bus 36 and inhibit a reverse current flow from the third power-supply bus 36 to the first power-supply bus 32.

Similarly, the positive voltage line 34a of the second power-supply bus 34 is connected to the positive voltage line 36a of the third power-supply bus through a second diode 42. The second diode 42 has the anode terminal connected to the positive voltage line 34a of the second power-supply bus 34 and the cathode terminal connected to the positive voltage line 36a of the third power-supply bus, so as to permit a direct current flow from the second power-supply bus 34 to the third power-supply bus 36 and inhibit a reverse current flow from the third power-supply bus 36 to the second power-supply bus 34.

The negative voltage line 32b of the first power-supply bus 32 is connected, in particular directly connected, to the negative voltage line 36b of the third power-supply bus; similarly, the negative voltage line 34b of the second power supply bus 34 is connected, in particular directly connected, to the negative voltage line 36b of the third power-supply bus.

The electric configuration of figure 2 allows users, during the use of the system 20 under driving condition (namely, when the storage units 24 and 27 supply power to the respective electric motors 22 and 25), to automatically balance the charge of the third storage unit 28 through the current flowing on the first and on the second power-supply bus 32, 34, namely through the energy provided by the first and the second storage unit 24, 27.

The operation of the power-supply system 20 will be described below by means of examples of significant operating conditions. In particular, the following assumptions will be made hereinafter: the auxiliary loads 30 absorb a power Px; the first and the second electric motor 22, 25 work with a symmetrical operation in terms of absorbed power, namely both the first electric motor 22 and the second electric motor 25 absorb a respective power Py.

### FIRST OPERATING CONDITION

In this operating condition, the respective states of charge of the first, of the second and of the third storage unit 24, 27, 28 are the same. In use, the auxiliary loads absorb a given power Px, running down the third storage unit 28. Hence, there is a difference of potential at the ends of the first and of the second diode 40, 42, which tends to re-balance the unbalance created by the absorption of power of the auxiliary loads 30 and to maintain the initial condition, in which the states of charge of the first, of the second and of the third storage unit 24, 27, 28 are the same.

Therefore, there is a respective current flow through the first and the second diode 40, 42, which is such as to transfer a power that is equal to or smaller than Px/2 from the first power-supply bus 32 to the third power-supply bus 36 and a power that is equal to or smaller than Px/2 from the second power-supply bus 34 to the third power supply bus 36.

Table 1 below schematically explains the operating condition described above, wherein the symbol "=" identifies a state of charge shared by the three storage units 24, 27, 28.

**Table 1**

| UNIT 24 | UNIT 27 | UNIT 28 | POWER OF DIODE 40 | POWER OF DIODE 42 |
|---|---|---|---|---|
| = | = | = | <Px/2 | <Px/2 |

Hence, in the first operating condition, there is a current flow from both the first and the second power-supply bus 32, 34 to the third power supply-bus 36, in order to make up for the consumption of the auxiliary loads 30 (which involves a corresponding use of the charge stored in the third storage unit 28). In particular, the power flowing towards the third power-supply bus 36 is proportional to the actual difference of potential at the ends of the diodes 40, 42 and, therefore, is self-regulated.

### SECOND OPERATING CONDITION

In this operating condition, the respective states of charge of the second and of the third storage unit 27, 28 are the same, whereas the state of charge of the first storage unit 24 is smaller than the state of charge of the third storage unit 28. The difference of potential at the ends of the first diode 40 is such that the first diode 40 is disabled and there is no current flow through it. On the other hand, the difference of potential at the ends of the second diode 42 is such that there is a current flow through the second diode 42, which is such as to transfer a power that is equal to or smaller than Px from the second power-supply bus 34 to the third power-supply bus 36.

Table 2 below schematically explains the operating condition described above, wherein the symbol "=" identifies a state of charge shared by the storage units 27 and 28 and the symbol "-" identifies a state of charge of the first storage unit 24, which is smaller than the one of the third storage unit 28.

**Table 2**

| UNIT 24 | UNIT 27 | UNIT 28 | POWER OF DIODE 40 | POWER OF DIODE 42 |
|---|---|---|---|---|
| - | = | = | 0 | <Px |

Hence, in the second operating condition, there is a current flow from the sole second power-supply bus 34 to the third power-supply bus 36 in order to make up for the consumption of the auxiliary loads 30. In particular, the power flowing towards the third power-supply bus 36 is proportional to the actual difference of potential at the ends of the diode 42 and, therefore, is self-regulated.

Similarly, the same behaviour also occurs in the case mirroring the one that was just described, in which the respective states of charge of the first and of the third storage unit 24, 28 are the same, whereas the state of charge of the second storage unit 27 is smaller than the state of charge of the third storage unit 28. The expected behaviour of the system 20 is schematically explained in table 3 below:

**Table 3**

| UNIT 24 | UNIT 27 | UNIT 28 | POWER OF DIODE 40 | POWER OF DIODE 42 |
|---|---|---|---|---|
| = | - | = | <Px | 0 |

### THIRD OPERATING CONDITION

In this operating condition, the respective states of charge of the first and of the second storage unit 24, 27 are the same, whereas the state of charge of the third storage unit 28 is smaller than the state of charge of the first (or second) storage unit 24 (or 27). The difference of potential at the ends of the first and of the second diode 40, 42 is such that there is a respective current flow through the first and the second diode 40, 42, which is such as to transfer a power that is equal to or greater than Px/2 from the first power-supply bus 32 to the third power-supply bus 36 and a power that is equal to or greater than Px/2 from the second power-supply bus 34 to the third power supply bus 36.

Table 4 below schematically explains the operating condition described above, wherein the symbol "=" identifies a state of charge shared by the two storage units 24, 27, whereas the symbol "-" identifies a state of charge of the third storage unit 28, which is smaller.

**Table 4**

| UNIT 24 | UNIT 27 | UNIT 28 | POWER OF DIODE 40 | POWER OF DIODE 42 |
|---|---|---|---|---|
| = | = | - | >Px/2 | >Px/2 |

Hence, in the third operating condition, there is a current flow from both the first and the second power-supply bus 32, 34 to the third power supply-bus 36, in order to make up for the consumption of the auxiliary loads 30 and restore the charge of the third storage unit 28. In particular, the power flowing towards the third power-supply bus 36 is proportional to the actual difference of potential at the ends of the diodes 40, 42 and, therefore, is self-regulated.

### FOURTH OPERATING CONDITION

In this operating condition, the respective states of charge of the first and of the second storage unit 24, 27 are the same, whereas the state of charge of the third storage unit 28 is greater than the state of charge of the first (or second) storage unit 24 (or 27). The difference of potential at the ends of the first and of the second diode 40, 42 is such that both diodes 40 and 42 are disabled and, therefore, there is no respective current flow through the first and the second diode 40, 42 towards the third power-supply bus 36.

Table 5 below schematically explains the operating condition described above, wherein the symbol "=" identifies a state of charge shared by the two storage units 24, 27, whereas the symbol "+" identifies a state of charge of the third storage unit 28, which is greater.

**Table 5**

| UNIT 24 | UNIT 27 | UNIT 28 | POWER OF DIODE 40 | POWER OF DIODE 42 |
|---|---|---|---|---|
| = | = | + | 0 | 0 |

In the fourth operating condition, there is a current flow neither from the first/second power-supply bus 24/26 to the third power-supply bus 36 nor in the opposite direction. Breakdown phenomena can be avoided by choosing suitable diodes 40, 42.

### FIFTH OPERATING CONDITION

In this operating condition, the respective states of charge of the second and of the third storage unit 27, 28 are the same, whereas the state of charge of the first storage unit 24 is greater than the state of charge of the third storage unit 28. The difference of potential at the ends of the first diode 40 is such that the first diode 40 is in conduction mode and transports a power that is equal to or greater than Px. On the other hand, the difference of potential at the ends of the second diode 42 is such that there is not current flow through the second diode 42.

Table 6 below schematically explains the operating condition described above, wherein the symbol "=" identifies a state of charge shared by the storage units 27 and 28 and the symbol "+" identifies a state of charge of the first storage unit 24, which is greater than the one of the third storage unit 28.

**Table 6**

| UNIT 24 | UNIT 27 | UNIT 28 | POWER OF DIODE 40 | POWER OF DIODE 42 |
|---|---|---|---|---|
| + | = | = | >Px | 0 |

Hence, in this operating condition, there is a current flow from the sole first power-supply bus 32 to the third power-supply bus 36 in order to make up for the consumption of the auxiliary loads 30. In particular, the power flowing towards the third power-supply bus 36 is proportional to the actual difference of potential at the ends of the diode 40 and, therefore, is self-regulated.

Similarly, the same behaviour also occurs in the case mirroring the one that was just described, in which the respective states of charge of the first and of the third storage unit 24, 28 are the same, whereas the state of charge of the second storage unit 27 is greater than the state of charge of the third storage unit 28. The expected behaviour of the system 20, in this case, is schematically explained in table 7 below:

**Table 7**

| UNIT 24 | UNIT 27 | UNIT 28 | POWER OF DIODE 40 | POWER OF DIODE 42 |
|---|---|---|---|---|
| = | + | = | 0 | >Px |

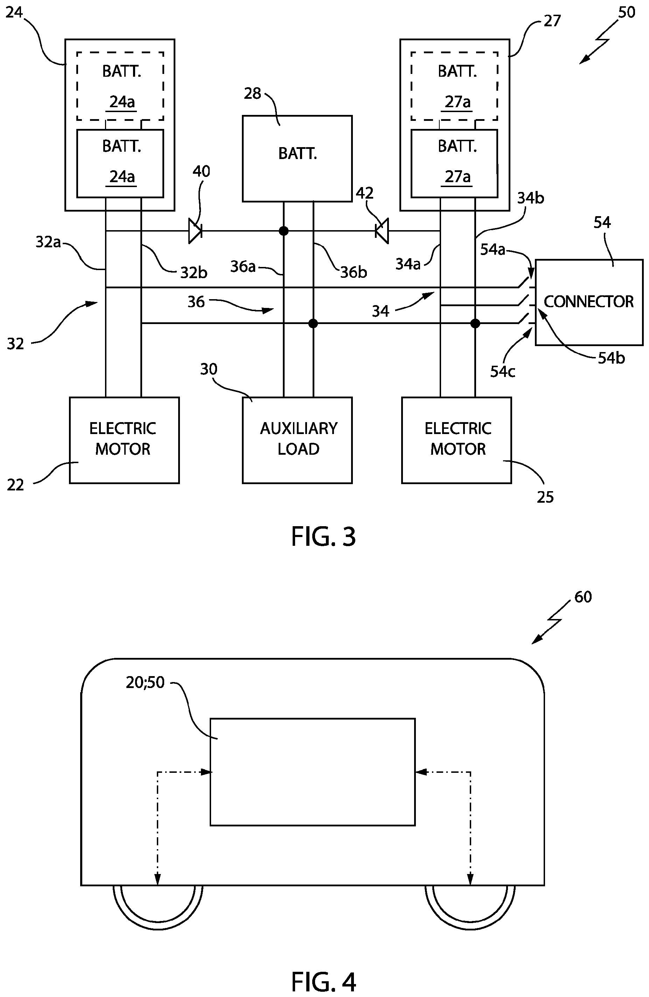

Figure 3 shows a power-supply system 50 including all the elements of the power-supply system 20 of figure 2 (identified with the same reference numbers and not described any further) and further including a connector 54 (also known as "charging inlet"), which is fixed to the electric/hybrid vehicle in a known manner and is provided with a first, a second and a third power-supply pin 54a, 54b and 54c, which are operatively coupled, through switches, to the first, to the second and to the third power-supply bus 32, 34, 36 in order to supply an electric current to the respective storage units 24, 27, 28 for the purpose of charging them.

According to a further embodiment, which is not shown herein and is indifferently based on the structure of figure 2 or of figure 3, there also are suitable switches or contactors, which are coupled between the electric motors 22, 25 and the respective power-supply buses 32, 34 and between the auxiliary loads 30 and the respective power-supply bus 36; the switches or contactors can be controlled so as to electrically couple/uncouple the electric motors 22, 25 to/from the respective power-supply lines 32, 34 and to electrically couple/uncouple the auxiliary loads 30 to/from the power-supply bus 36. Similar switches/contactors can be provided in order to couple/uncouple the storage units 24, 27, 28 to/from the respective power-supply lines 32, 34, 36.

The aforesaid switches are operatively connected to an electronic control unit of the vehicle, which is configured to shift the switches to an open and closed state in order to implement different operating modes. For example, the electronic control unit is configured to control the switches so as to implement a plurality of operating modes of the vehicle, among which there are, in particular: a "key-off" mode, a power-supply mode powering the electric motors/auxiliary loads and a storage unit charging mode.

In the key-off mode, the motors of the electric vehicle are not powered by means of the storage units and, at the same time, the storage units are not being charged (for example, when the electric vehicle is parked).

In the power-supply mode, the electric motors are powered by means of the respective storage unit (for example, during the drive). In some operating conditions, only one of the two electric motors could need to be powered by means of the respective storage unit.

In the charging mode, the storage units are charged using the charging voltage provided by fixed the charging station.

The electronic control unit can be the electronic control unit of the electric/hybrid vehicle, properly configured, via software, to implement the aforesaid operating modes; alternatively, the electronic control unit can be a further control unit in addition to the electronic control unit of the electric vehicle or a generic controller, properly configured and designed to implement the aforesaid operating modes.

Figure 4 schematically shows an electric or hybrid vehicle 60 comprising a power-supply system according to any one of the embodiments described above, in particular a power-supply system 20 of the type shown in figure 2 or a power-supply system 50 of the type shown in figure 3.

Owing to the above, the advantages of the subject-matter of the invention are evident.

Indeed, when the invention is applied to an electric/hybrid vehicle with three or more storage units for powering respective electric motors working in mechanical symmetry as well as auxiliary devices (as shown in figure 2), there is an optimization of wiring and fuses as well as a better designing easiness in order to reduce short-circuit current, ensure redundancy and improve safety. The invention entails powering the two electric motors 22, 25 and the auxiliary loads 30 using three different power-supply lines 32, 34 and 36, each connected to a respective group of batteries 24, 27 and 28; the presence of the diodes 40, 42 allows the reverse power flow from the auxiliary line 36 to the power-supply lines 32, 34 to be automatically disabled. If, during the driving use of the vehicle, there is an unbalance between the three power supplies (namely, between the storage units 24, 27 associated with the electric motors 22, 25 and the storage unit 28 associated with the auxiliary loads 30), the configuration of the invention permits an automatic re-balancing or, anyway, allows the operation of the auxiliary loads 30 to remain active even in case the battery unit 28 is not capable of providing all the power supply needed. A complete re-balancing of all storage units 24, 27, 28 is possible during the charging phase when the vehicle is standing still (which is not part of the subject-matter of the invention).

Finally, the subject-matter of the invention can be subjected to changes and variants, which, though, do not go beyond the scope of protection set forth in the appended claims.

In particular, the diode 40 and the diode 42 can be replaced by similar active or passive components or devices having an equivalent function, namely the function of permitting a direct current flow from the power-supply buses 32 and 34 to the power-supply bus 36 and inhibiting a reverse current flow from the power-supply bus 36 to the power-supply buses 32 and 34.

In the embodiments of the invention which are not shown in the figures, the diodes 40 and 42 can be replaced by thyristors or SCRs (silicon-controlled rectifiers).

## Claims

1. A power supply system (20, 50) for an electric or hybrid vehicle, including:
- a first storage unit (24) coupled to a first electric motor (22) via a first power-supply bus (32);
- a second storage unit (27) coupled to a second electric motor (25) via a second power-supply bus (34);
- a third storage unit (28) coupled to at least one auxiliary electrical load (30) via a third power-supply bus (36),
the first power-supply bus (32) is connected to the third power-supply bus (36) through a first device (40) configured to allow a direct current flow from the first power-supply bus (32) to the third power-supply bus (36) and inhibit a reverse current flow from the third power-supply bus (36) to the first power-supply bus (32), and
the second power-supply bus (34) is connected to the third power-supply bus (36) through a second device (42) configured to allow a direct current flow from the second power-supply bus (34) to the third power-supply bus (36) and inhibit a reverse current flow from the third power-supply bus (36) to the second power-supply bus (34).
**characterized by** further including a connector (5 4) that is connectable to a charging station to receive a vehicle charging voltage,
wherein said connector (54) which is fixed to said vehicle and is provided with a first, a second and a third power-supply pin (54a, 54b, 54c), which are operatively coupled, through switches, to the first, to the second and to the third power-supply bus (32, 34, 36) to transfer a charging voltage received from the charging station to the first, second and third storage unit (24, 27, 28), respectively.

2. The system according to claim 1, wherein:
the first power-supply bus (32) includes a first positive voltage line (32a) and a first negative voltage line (32b);
the second power-supply bus (34) includes a second positive voltage line (34a) and a second negative voltage line (34b);
the third power-supply bus (36) includes a third positive voltage line (36a) and a third negative voltage line (36b),
and wherein the first device (40) is electrically connected between the first positive voltage line (32a) and the third positive voltage line (36a), and the second device (42) is electrically connected between the second positive voltage line (34a) and the third positive voltage line (36a).

3. The system according to claim 2, where the first negative voltage line (32b) is directly connected to the third negative voltage line (36b), and the second negative voltage line (34b) is directly connected to the third negative voltage line (36b).

4. The system according to claim 3, wherein the first device (40) has an anode terminal connected to the first positive voltage line (32a) and a cathode terminal connected to the third negative voltage line (36b),
and wherein the second device (42) has a respective anode terminal connected to the second positive voltage line (32a) and a respective cathode terminal connected to the third negative voltage line (36b).

5. The system according to any of the above claims, wherein the first storage group (24) and the second storage group (27) are configured to store the same amount of energy.

6. The system according to anyone of the preceding claims, wherein the first electric motor (22) and the second electric motor (25) are configured to absorb the same amount of energy during use.

7. The system according to anyone of the preceding claims, wherein the first device is a first diode (40), and the second device is a second diode (42).

8. A vehicle (60) powered by batteries, including a power supply system (20, 50) according to anyone of claims 1 to 7.

## Patentansprüche

1. Ein Stromversorgungssystem (20, 50) für ein elektrisches oder Hybridfahrzeug, umfassend:
eine erste Speichereinheit (24), die über einen ersten Stromversorgungsbus (32) mit einem ersten Elektromotor (22) gekoppelt ist;
eine zweite Speichereinheit (27), die über einen zweiten Stromversorgungsbus (34) mit einem zweiten Elektromotor (25) gekoppelt ist;
eine dritte Speichereinheit (28), die über einen dritten Stromversorgungsbus (36) mit mindestens einer zusätzlichen elektrischen Last (30) gekoppelt ist,
wobei der erste Stromversorgungsbus (32) über eine erste Vorrichtung (40) mit dem dritten Stromversorgungsbus (36) verbunden ist, die dazu eingerichtet ist, einen Gleichstromfluss vom ersten Stromversorgungsbus (32) zum dritten Stromversorgungsbus (36) zuzulassen und einen umgekehrten Stromfluss vom dritten Stromversorgungsbus (36) zum ersten Stromversorgungsbus (32) zu verhindern, und
wobei der zweite Stromversorgungsbus (34) über eine zweite Vorrichtung (42) mit dem dritten Stromversorgungsbus (36) verbunden ist, die dazu eingerichtet ist, einen Gleichstromfluss vom zweiten Stromversorgungsbus (34) zum dritten Stromversorgungsbus (36) zuzulassen und einen umgekehrten Stromfluss vom dritten Stromversorgungsbus (36) zum zweiten Stromversorgungsbus (34) zu verhindern,
**dadurch gekennzeichnet, dass** das Stromversorgungssystem ferner einen Anschluss (5 4) umfasst ist, der mit einer Ladestation verbindbar ist, um eine Fahrzeugladespannung zu empfangen,
wobei der Anschluss (54), der an dem Fahrzeug befestigt ist, mit einem ersten, einem zweiten und einem dritten Versorgungsstift (54a, 54b, 54c) versehen ist, die über Schalter funktionsmäßig mit dem ersten, dem zweiten und dem dritten Stromversorgungsbus (32, 34, 36) gekoppelt sind, um eine von der Ladestation empfangene Ladespannung jeweils an die erste, zweite und dritte Speichereinheit (24, 27, 28) zu übertragen.

2. Das System nach Anspruch 1, wobei:
der erste Stromversorgungsbus (32) eine erste positive Spannungsleitung (32a) und eine erste negative Spannungsleitung (32b) umfasst;
der zweite Stromversorgungsbus (34) eine zweite positive Spannungsleitung (34a) und eine zweite negative Spannungsleitung (34b) umfasst;
der dritte Stromversorgungsbus (36) eine dritte positive Spannungsleitung (36a) und eine dritte negative Spannungsleitung (36b) umfasst, und
wobei die erste Vorrichtung (40) elektrisch zwischen der ersten positiven Spannungsleitung (32a) und der dritten positiven Spannungsleitung (36a) angeschlossen ist und die zweite Vorrichtung (42) elektrisch zwischen der zweiten positiven Spannungsleitung (34a) und der dritten positiven Spannungsleitung (36a) angeschlossen ist.

3. Das System nach Anspruch 2, wobei die erste negative Spannungsleitung (32b) direkt mit der dritten negativen Spannungsleitung (36b) verbunden ist und die zweite negative Spannungsleitung (34b) direkt mit der dritten negativen Spannungsleitung (36b) verbunden ist.

4. Das System nach Anspruch 3, wobei die erste Vorrichtung (40) einen Anodenanschluss aufweist, der mit der ersten positiven Spannungsleitung (32a) verbunden ist, und einen Kathodenanschluss, der mit der dritten negativen Spannungsleitung (36b) verbunden ist, und
wobei die zweite Vorrichtung (42) einen jeweiligen Anodenanschluss aufweist, der mit der zweiten positiven Spannungsleitung (32a) verbunden ist, und einen jeweiligen Kathodenanschluss, der mit der dritten negativen Spannungsleitung (36b) verbunden ist.

5. Das System nach einem der vorhergehenden Ansprüche, wobei die erste Speichergruppe (24) und die zweite Speichergruppe (27) dazu eingerichtet sind, dieselbe Energiemenge zu speichern.

6. Das System nach einem der vorhergehenden Ansprüche, wobei der erste Elektromotor (22) und der zweite Elektromotor (25) dazu eingerichtet sind, während des Betriebs dieselbe Energiemenge aufzunehmen.

7. Das System nach einem der vorhergehenden Ansprüche, wobei die erste Vorrichtung eine erste Diode (40) ist und die zweite Vorrichtung eine zweite Diode (42) ist.

8. Ein durch Batterien angetriebenes Fahrzeug (60), umfassend ein Stromversorgungssystem (20, 50) nach einem der Ansprüche 1 bis 7.

## Revendications

1. Système d'alimentation électrique (20, 50) pour un véhicule électrique ou hybride, comprenant :
- une première unité de stockage (24) couplée à un premier moteur électrique (22) par l'intermédiaire d'un premier bus d'alimentation électrique (32) ;
- une deuxième unité de stockage (27) couplée à un deuxième moteur électrique (25) par l'intermédiaire d'un deuxième bus d'alimentation électrique (34) ;
- une troisième unité de stockage (28) couplée à au moins une charge électrique auxiliaire (30) par l'intermédiaire d'un troisième bus d'alimentation électrique (36),
dans lequel le premier bus d'alimentation électrique (32) est connecté au troisième bus d'alimentation électrique (36) par l'intermédiaire d'un premier dispositif (40) configuré pour permettre un flux de courant continu du premier bus d'alimentation électrique (32) vers le troisième bus d'alimentation électrique (36) et pour empêcher un flux de courant inverse du troisième bus d'alimentation électrique (36) vers le premier bus d'alimentation électrique (32), et
dans lequel le deuxième bus d'alimentation électrique (34) est connecté au troisième bus d'alimentation électrique (36) par l'intermédiaire d'un deuxième dispositif (42) configuré pour permettre un flux de courant continu du deuxième bus d'alimentation électrique (34) vers le troisième bus d'alimentation électrique (36) et pour empêcher un flux de courant inverse du troisième bus d'alimentation électrique (36) vers le deuxième bus d'alimentation électrique (34) ;
**caractérisé en ce qu'**il comprend en outre un connecteur (54) qui peut être connecté à une station de charge pour recevoir une tension de charge de véhicule,
dans lequel ledit connecteur (54), qui est fixé audit véhicule, est doté d'une première, d'une deuxième et d'une troisième broches d'alimentation électrique (54a, 54b, 54c), qui sont couplées de manière opérationnelle, par le biais de commutateurs, aux premier, deuxième et troisième bus d'alimentation électrique (32, 34, 36) pour transférer une tension de charge reçue de la station de charge vers les première, deuxième et troisième unités de stockage (24, 27, 28), respectivement.

2. Système selon la revendication 1, dans lequel :
le premier bus d'alimentation électrique (32) comprend une première ligne de tension positive (32a) et une première ligne de tension négative (32b) ;
le deuxième bus d'alimentation électrique (34) comprend une deuxième ligne de tension positive (34a) et une deuxième ligne de tension négative (34b) ;
le troisième bus d'alimentation électrique (36) comprend une troisième ligne de tension positive (36a) et une troisième ligne de tension négative (36b),
et dans lequel le premier dispositif (40) est connecté électriquement entre la première ligne de tension positive (32a) et la troisième ligne de tension positive (36a), et le deuxième dispositif (42) est connecté électriquement entre la deuxième ligne de tension positive (34a) et la troisième ligne de tension positive (36a).

3. Système selon la revendication 2, dans lequel la première ligne de tension négative (32b) est directement connectée à la troisième ligne de tension négative (36b), et la deuxième ligne de tension négative (34b) est directement connectée à la troisième ligne de tension négative (36b).

4. Système selon la revendication 3, dans lequel le premier dispositif (40) présente une borne d'anode connectée à la première ligne de tension positive (32a) et une borne de cathode connectée à la troisième ligne de tension négative (36b),
et dans lequel le deuxième dispositif (42) présente une borne d'anode respective connectée à la deuxième ligne de tension positive (32a) et une borne de cathode respective connectée à la troisième ligne de tension négative (36b).

5. Système selon l'une quelconque des revendications précédentes, dans lequel la première unité de stockage (24) et la deuxième unité de stockage (27) sont configurées pour stocker la même quantité d'énergie.

6. Système selon l'une quelconque des revendications précédentes, dans lequel le premier moteur électrique (22) et le deuxième moteur électrique (25) sont configurés pour absorber la même quantité d'énergie pendant l'utilisation.

7. Système selon l'une quelconque des revendications précédentes, dans lequel le premier dispositif est une première diode (40) et le deuxième dispositif est une deuxième diode (42).

8. Véhicule (60) alimenté par des batteries, comprenant un système d'alimentation électrique (20, 50) selon l'une quelconque des revendications 1 à 7.
